Europäisches Patentamt

European Patent Office

Office européen des brevets

(19)

(11) **EP 1 120 722 A2**

(12) **EUROPEAN PATENT APPLICATION**

(43) Date of publication:
    **01.08.2001 Bulletin 2001/31**

(51) Int Cl.⁷: **G06F 17/30**

(21) Application number: **01300250.6**

(22) Date of filing: **12.01.2001**

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI** | (71) Applicant: **Applied Psychology Research Limited**<br>**London NWH 2DX (GB)** |
| (30) Priority: **15.03.2000 GB 0006290**<br>**13.01.2000 US 175900 P** | (72) Inventor: **Brown, Daniel**<br>**London NW6 2NT (GB)** |
| | (74) Representative: **Collins, John David**<br>**Marks & Clerk,**<br>**57-60 Lincoln's Inn Fields**<br>**London WC2A 3LS (GB)** |

(54) **Method and apparatus for generating categorization data**

(57)     A computer apparatus (9) is provided comprising a site profile database (23) for storing site profile records associating websites with website classification data comprising a plurality of category values assessing the content of the websites in a plurality of categories and a user profile database (27) for storing user profile records including classification data classifying the interests of users in the same categories. When user identification data (15) and data identifying a website is received by the apparatus (9) the record within the site profile database corresponding to the identified website is updated utilizing the classification data associated with the received user identification data (15) by a record in the user profile database (27) and the classification data associated with received user identification data (15) in the record in the user profile database (27) is updated utilizing classification data within the record in the site profile database (23) associated with the identified website.

FIG. 1

**Description**

The present application relates to method and apparatus for generating categorization data. In particular, embodiments of the present invention relate to method and apparatus for generating categorization data, sometimes referred to as meta data categorizing content accessible via a communications network such as the Internet.

As the number of Internet websites has increased, it has become increasingly difficult for search engines to catalogue the content of available websites. Where the content of a website is reviewed by an individual so that it may be appropriately classified, the growth of the Internet has required ever larger numbers of individuals to be employed to carry out website reviews.

In order to reduce the amount of labour involved in generating classification data for use by search engines, the generation of classification data has to a certain extent been automated by computer programs arranged to search for key words within the text of a website. Although such classification programs do reduce the amount of human input required to generate classification data, the accuracy of the resulting classification data is dependent upon key words being included within text of an Internet website and for those detected key words being an accurate reflection of the content of a website. These limitations of automated classification programs can result in the mis-classification of websites.

Thus, for example, where the meaning of a word can depend upon its context or the same word may have different meanings in different languages, automatically generated classification data can be inaccurate. Similarly, if website content is made available in a form other than text data, for example with the inclusion of text in graphic data displayed as part of a website, keywords for classification may not be available to an automated classification program.

Furthermore, using key words to generate classification data is open to abuse since websites may deliberately include, within their textual content, key words which they believe will cause their website to be classified in certain ways to influence the way in which their website is classified even if such classification is not an accurate reflection of the content of the website.

There is, therefore, a need for a computer system which provides an alternative means by which classification data for websites can be generated which does not require large amounts of labour to achieve accurate classification of the content of a website.

In accordance with one aspect of the present invention there is provided computer apparatus comprising:

means for receiving data indicative of a user and data indicative of a website accessed by said user;
first database means for storing records associating data identifying users with user categorization data; and
a second database for storing records associating data indicative of websites with website categorization data, wherein said apparatus is arranged upon receipt of data identifying a given user and a given website to amend said user categorization data associated with data identifying a user utilising said website categorization data associated with said data identifying a website, and to amend said website categorization data associated with data identifying a website utilising said user categorization data associated with said data identifying a user.

The applicants have appreciated that one way in which the content of a website may be classified is in terms of the interests of users accessing the website. Furthermore, the interests of users may be determined from the classification of the websites which those users access. Therefore, following an arbitrary initial assessment of the content of a website, the classification of a website can then be more accurately determined by monitoring and updating assigned classification data utilising interest data associated with the users accessing that website. At the same time more accurate user interest profiles can be generated by modifying such profiles utilising data indicative of the content of websites those users visit. Thus even if the initial assessment of the users interests or the content of a website is not particularly accurate, the subsequent modification as a result of different users visiting different websites will cause the accuracy of the classification data to improve.

Thus in this way, embodiments of the present invention provide a learning system for generating categorization data or meta data indicative of the content of websites and of user's interests. The generated categorization data can then be utilized either by search engines to enable users to select sites of interest or to enable advertising of websites to be targeted to individuals associated with metadata indicative of particular interests.

Other aspects of the present invention will become apparent with reference to the accompanying description and drawings in which:

Figure 1 is a schematic block diagram of a computer network embodying a first embodiment of the present invention;

Figure 2 is a schematic block diagram of an exemplary data structure for records stored within a site profile database;

Figure 3 is a schematic block diagram of an exemplary data structure for records stored within a user profile database;

Figure 4 is a flow diagram of the processing of a processing module of a client server;

Figure 5 is an exemplary illustration of a user display incorporating a banner advert;

Figure 6 is a flow diagram of the processing of the control module of the main server;

Figure 7 is an exemplary illustration of a user interface for inputting user classification data;

Figure 8 is an exemplary illustration of a user display outputting the results of a search; and

Figure 9 is a schematic block diagram of a computer network embodying a second embodiment of the present invention.

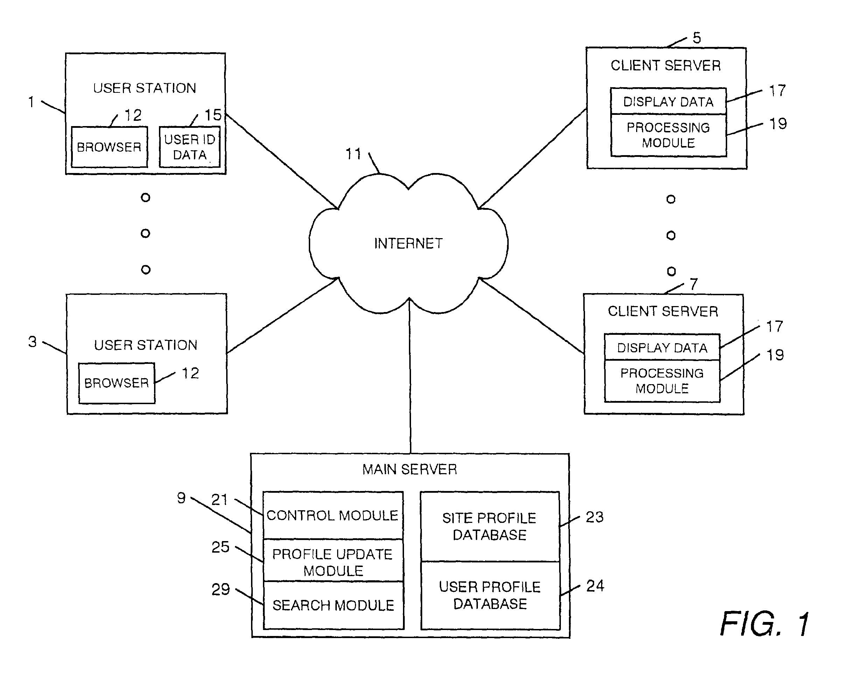

Figure 1 is a schematic block diagram of a computer network embodying the present invention. The computer network comprises a plurality of user stations 1,3 that are connected to a plurality of client servers 5,7 and a main server 9 via the Internet 11 which enables data to be transferred between the user stations 1,3, the plurality of client servers 5,7 and the main server 9.

The plurality of user stations 1,3 each comprise conventional computer apparatus which are connected to a display and a user input device such as a keyboard or mouse (not shown in Figure 1). Stored within the memory of each of the user stations 1,3 is a browser program 12 comprising a conventional browser program such as Netscape Navigator or Microsoft Explorer. Additionally, stored within the memories of some of the user stations 1 is user identification data 15.

The plurality of client servers 5,7 each have stored therein display data 17 comprising hypertext markup (HTML) scripts defining websites, for dispatch via the Internet 11 to the user stations 1,3 to cause the browser programs 12 within the user stations 1,3 to generate and display screen displays corresponding to the websites. The plurality of client servers 5,7 also each have stored therein a processing module 19 for coordinating the transfer of data between the client server 5;7, the main server 5 and the plurality of user stations 1,3 as will be described in detail later.

In this embodiment, the main server 9 has stored therein a control module program 21 for controlling the overall processing of the main server 9; a site profile database 23 containing site profile records associating data indicative of websites with classification data and display data; a user profile database for storing user records associating data corresponding to user identification data 15 stored within user stations 1,3 with further classification data; a profile update module 25 for generating and amending records stored within the site profile database 23 and the user profile database 24; and a search module 29 for retrieving records from the site profile database 23.

In use, when a user causes a user station 1;3 to access via -the Internet 11 display data 17 stored within a client server 5;7 this is detected by the data transfer module 19 stored on the client server 5;7. The data transfer module 19 then causes data to be dispatched to the main server 9 via the Internet 11. In this embodiment the data dispatched by a client server comprises data identifying the website corresponding to the display data 17 accessed by a user together with data corresponding to user identification data 15, stored in the memory of the user station 1, used to access the display data 17 if such data exists.

When the main server 9 receives data indicative of a website and data corresponding to user identification data, the control module 21 causes the profile update module 25 to amend the classification data stored within the site profile database 23 and the user profile database 24 within records associated with received data. This is achieved by the profile update module 25 updating the classification data within the site profile database 23 associated with received website data utilizing the classification data associated with the received user data and the profile update module 25 updating the classification data associated with received user identification data 5 utilizing the classification data associated with the received website data.

Thus in this way the classification data associated with a website within site profile records in the site profile database 23 are made dependent upon the classification data associated with user identification data 15 of individuals accessing the website identified by the site profile record. Similarly, the classification data associated with user identification data 15 within records in the user profile database 24 is made dependent upon the classification data associated with websites by site profile records in the site profile database 23 corresponding to websites accessed via a user station 1 having corresponding user identification data 15 stored thereon.

The repeated access of different websites by different individuals therefore causes the site profile records and user profile records stored within the site profile database 23 and user profile database 24 to be amended so that the classification data associated with websites within the site profile database 23 more closely reflects the interests of individuals accessing a particular website and the classification data within the user profile record in the user profile database 24 more closely reflects the content of websites accessed by an individual, classified in terms of the content of other websites accessed by other individuals who have also accessed the websites accessed by that individual.

In this embodiment the generated user profile records within the user profile database 24 are then used by the search module 29 to select from the site profile database advertisement data associated with a website and classification data determined to be similar to the classification data corresponding to received user identification data 15. This advertisement data is then transmitted via the Internet 11 to the data transfer module 19 of a client server 5;7 that has been accessed via a user station 1;3 which then causes the advertisement data to be incorporated in display data which is transmitted to a user station 1;3 for display to a user. Thus in this way the data within the site profile database 23 and user profile database 24 is utilized to cause to be incorporated within display data shown to a user advertisement data for websites determined to have content corresponding to a user's interests.

Alternatively, in accordance with this embodiment a user station 1 can be used to access the main server 9 directly via the Internet 11, to request a list of websites identified as corresponding to a user's interests. When a user station 1 accesses the main server 9 via the Internet 11 this causes the search module 29 to select a number of items of website data stored within the site profile database 23 associated with classification data which is similar to input classification data or alternatively similar to classification data associated with data corresponding to the user identification data 15 stored within the user station 1 accessing the main server 9. The retrieved data from the site profile database 23 is then utilised to generate display data to be dispatched to the user station 1;2.

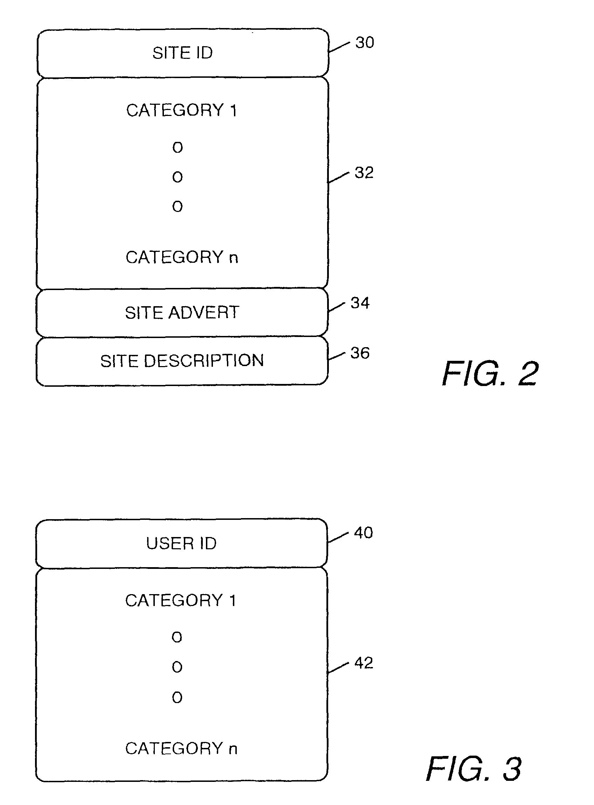

Prior to describing in detail the processing of the data transfer module 19 of the client severs 5;7 and the processing of the control module 21 of the main server 9, data structures for site profile records within the site profile database 23 and user profile records within the user profile database 24 stored within the main server 9 will now be described with reference to Figures 2 and 3.

Figure 2 is a schematic block diagram of an exemplary data structure for site profile records stored within the site profile database 23 of the main server 9.

In this embodiment of the present invention, site profile records within the site profile database 23 comprise site identification data 30 comprising data identifying the universal resource locator address (URL) of a website stored on a client server 5;7, n items of classification data 32 being an assessment of the content of a website having a URL corresponding to the site identification data 30 of the record; site advert data 34 comprising display data for generating a banner advert, advertising the website having a URL corresponding to the site identification data 30 of the record and a site description 36 comprising text data being a text description of the content of the website having a URL corresponding to the site ID 30 of the record.

Each site profile record within the site profile database 23 enables site identification data 30 to be associated with data comprising an advertisement for the site 34, a text description of the content of the site 36, and n items of classification data 32. In accordance with the present invention, the n items of classification data 32 provide a means by which the content of a website is classified in terms of percentage of a website dedicated to a particular area of interest. An exemplary classification could comprise data indicative of the extent to which the content of a website concerns the following five items:

    HOME
    TECHNOLOGY
    SPORT
    TRAVEL
    GIFTS

As will be described in detail later initially when a site profile record is entered in the site profile database 23 an assessment is made of the content of a website stored at the URL indicated by the site ID of the content of a website stored at the URL indicated by the site ID 30 regarding the content of that site. Thus for example the site profile record for a website concerned solely with sport might have as its classification data 32 the following values for the above five categories.

| HOME | 0 |
| TECHNOLOGY | 0 |
| SPORT | 100 |
| TRAVEL | 0 |
| GIFTS | 0 |

The initial classification data associated with websites having different content would comprise classification data 32 having different values where the different values are indicative of the portion of the site concerned with the different categories of classification data 32. Thus for example another site concerned with sales of televisions and computers for use at home might be initially classified with the following classification data.

| | |
|---|---|
| HOME | 50 |
| TECHNOLOGY | 30 |
| SPORT | 0 |
| TRAVEL | 0 |
| GIFTS | 20 |

As will be described in detail later after a site profile record has been assigned to a website corresponding to a site identification data 30 including values for the n categories of classification data 32 this data is then updated and amended so that the classification data 32 corresponds more closely to classification data associated with individuals accessing of that site.

Figure 3 is a schematic block diagram of an exemplary data structure for a user profile record stored within the user profile database 24 of the main server 9.

In this embodiment the user profile record within the user profile database 24 comprises user identification data 40 corresponding to user identification data 15 stored within a user station 1 and classification data 42 comprising n categories corresponding to the n categories of classification data 32 within site profile records within the site profile database 23.

As will be described in detail later when a user initially accesses data within a client server 5;7 the processing module 19 stored within the client server 5;7 determines if the user station 1;3 accessing display data 17 within the client server 5;7 has stored thereon user identification data 15. If no user identification data 15 is determined to be stored within the user station 3 the processing module 19 then causes the control module 21 of the main server 9 to create a new user profile record within the user profile database 24 comprising a newly generated user identification data 40 and n items of classification data 42 corresponding to the n items of classification data 32 of the record within the site profile database 23 having a site identification data 30 corresponding to the URL of the server 5;7. The processing module 19 then causes new user identification data corresponding to the newly generated user identification data 40 of the new record within the user profile database 24 to be stored on the user station 3 with access data within the client server 5;7.

Thus for example if a user station 3 not having user identification data 15 stored thereon were to access a client server 5;7, a website stored thereon classified as a site concerned solely with sport as has been described above a new user profile record would be generated and stored for that user station comprising a new user identification data 40 and classification data 42 comprising the following classification data.

| | |
|---|---|
| HOME | 0 |
| TECHNOLOGY | 0 |
| SPORT | 100 |
| TRAVEL | 0 |
| GIFTS | 0 |

If the same user station were then to access the website concerning home technology described above the profile update module 25 of the main server 9 then causes the user profile record corresponding to the user to be amended to indicate that the user station had been utilized to access a website identified with classification data 42 indicating interests in home, technology and gifts. Thus for example in this embodiment the classification data 42 associated with the individual would be amended to become as follows:

| | |
|---|---|
| HOME | 50 |
| TECHNOLOGY | 30 |
| SPORT | 100 |
| TRAVEL | 0 |
| GIFTS | 20 |

Thus as a user station 1;3 having user identification data 15 accesses different websites, each time a website is accessed classification data 42 corresponding to the stored user identification data 15 within a user profile record in the user profile database 24 is amended by adding to the value of the n categories of classification data 42 values corresponding to the n values of classification data 32 associated with the site. The repeated amendment of classification data 42 associated with user identification data 40 corresponding to user identification data 15 stored within the user station thus causes the distribution of values within classification data 42 associated with the user identification data 40 to reflect the average content of websites accessed by that individual.

Thus for example in the case of an individual visiting the sports site described above five times and the home technology site only once the classification data for that individual would become:

| HOME | 50 |
| TECHNOLOGY | 30 |
| SPORT | 500 |
| TRAVEL | 0 |
| GIFTS | 20 |

The repeated access by that individual of a site solely concerned with sport would therefore becomes apparent in the classification data 42 associated with that individual since the relative value of the category data associated with sport is weighted as a result of the repeated visits to the sport site in proportion to the number of those visits compared to the values associated for the sites which are not visited as often.

As will be described in detail later in addition to user profile records within the user profile database 24 being modified when a website is accessed, classification data 32 within the site profile record corresponding to the website accessed by a user is also amended. In this embodiment, this amendment is such to alter the classification data 32 to account for the access of that website by an individual having interests corresponding to the interests indicated by the classification data 42 indicated by the user profile record within the user profile database 24 corresponding to the user identification data 15 stored within the user station.

Thus for example if the above described home technology site were to be accessed by an individual associated with the following classification data 42:

| HOME | 155 |
| TECHNOLOGY | 240 |
| SPORT | 60 |
| TRAVEL | 400 |
| GIFTS | 145 |

In accordance with this embodiment of the present invention the classification data 32 associated with the site would be amended by initially determining the percentages of the values associated with each category by the classification data 32 for the individual corresponds relative to the total for all n categories. New classification data 42 for the site would then be determined by calculating a weighted sum for each category and then rescaling the determined sum so that the total for all n categories remains constant, in this example equal to one hundred.

Thus in the case of the above described home technology site the reassessment of categorization values might be as follows where the current values for a site are weighted ten times greater than the individual's values:

| CATEGORY | USER VALUES | USER % | OLD SITE VALUES | SCALED SUM | NEW SITE VALUE |
|---|---|---|---|---|---|
| HOME | 157 | 15.7 | 50 | 515.7 | 47 |
| TECHNOLOGY | 240 | 24.0 | 30 | 324.0 | 29 |
| SPORT | 58 | 5.8 | 0 | 5.8 | 0 |
| TRAVEL | 402 | 40.2 | 0 | 40.2 | 4 |
| GIFTS | 143 | 14.3 | 20 | 214.3 | 20 |
| **TOTAL** | **1000** | **100** | **100** | **1100** | **100** |

Thus in this way the categories associated with the site are adjusted to reflect the interest of the individuals accessing that site. After large numbers of individuals with different interests access a particular site the classification data 32 associated with that site therefore reflects the interests of individuals accessing the site rather than the arbitrary initial classification data associated with that site.

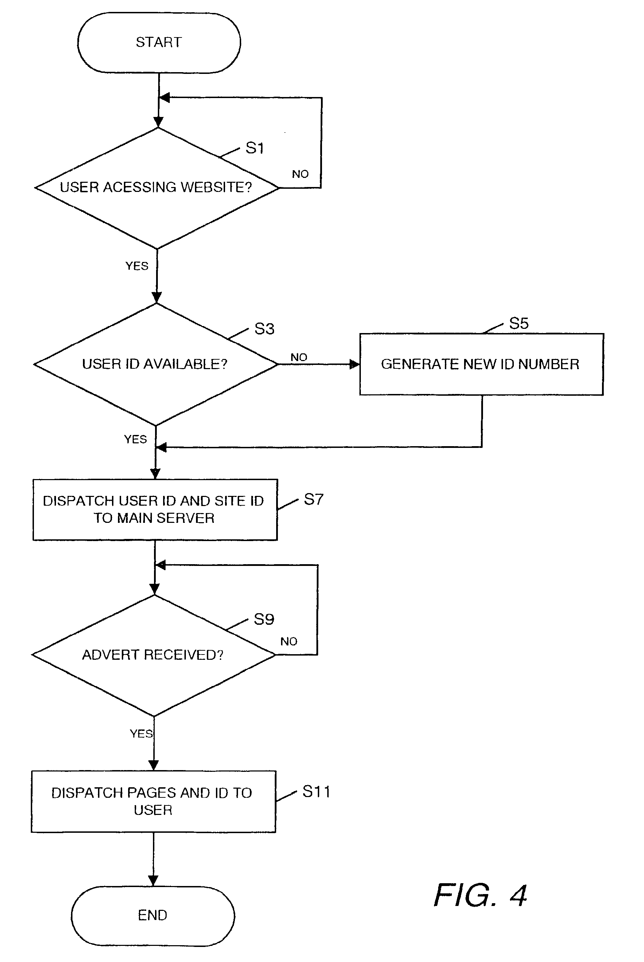

Figure 4 is a flow diagram illustrating the processing of a processing module 19 stored within a client server 5;7.

Initially the processing module 19 determines (S1) whether a user station 1;3 is attempting to access the display data 17 stored within the client server 5. When the processing module 19 determines that a user station 1;3 is attempting to access the display data 17 stored within the client server 5;7 the processing module 19 then requests that the user station 1;3 accessing the client server 5;7 via the Internet 11 outputs a copy of user identification data 15 stored within the memory of the user station 5;3 if such data exists. If following the request the client server 5;7 determines (S3) that data received via the Internet 11 indicates that no user identification data 15 stored within the user station 1;3 the processing module 19 then generates (S5) a new unique user identification number for use as user identification data 15.

If the client server 5;7 determines (S3) that data received via the Internet 11 comprises a copy of the user identification data 15 stored within a user station 1 or after a new unique user identification number has been generated (S5) the processing module 19 of the client server 5;7 then (S7) transmits this data together with data indicative of the URL of the website stored as display data 17 within the client server 5 via the Internet 11 to the main server 9.

The processing module 19 then (S9) waits until a display data for a site advert is received from the main server 9. When advert data has been received the processing module 19 then dispatches (s11) display data for generating a web page utilising display data 17 stored within the client server 5;7 and the received advert data to a user station 1;3 together with any generated user identification data (S5). This display data is then utilized by the browser program 12 within the user station 1;3 to generate a user display. After the display data has been dispatched to the user station 1;3 via the Internet 11 the processing of the processing module 19 ends.

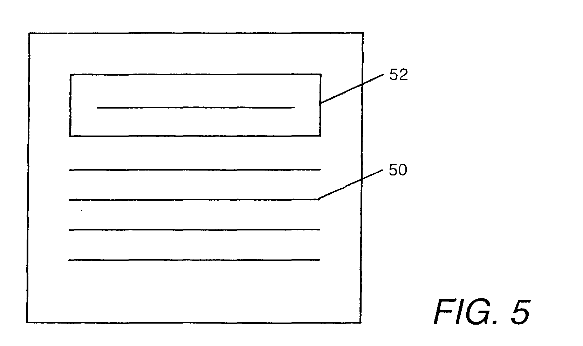

Figure 5 is an exemplary illustration of a user display shown on the screen of a user station 1;3 following the receipt of display data from a client server 5;7 via the Internet. In this example the screen display comprises a main display 50 corresponding to the display data 17 stored on the client server 5;7 from which display data has been received and a banner advert 52 at the top of the display corresponding to selected advert data within a site profile record within the site profile database 23 of the main server 9.

As will be described in detail later the site advert data 34 incorporated with display data 17 from a client server 5; 7 is selected so that the classification data 32 of the record within the site profile database 23 including the site advert data 34 is similar to the classification data 42 associated with user identification data 15 stored within a user station 1;3. The present invention therefore provides means by which advertising for a particular website may be targeted towards users who are most likely to be interested in visiting a particular website since the classification data 32 associated with the website substantially corresponds to the classification data 42 associated with the user identification data on the user station 1;3 indicating that user's interests.

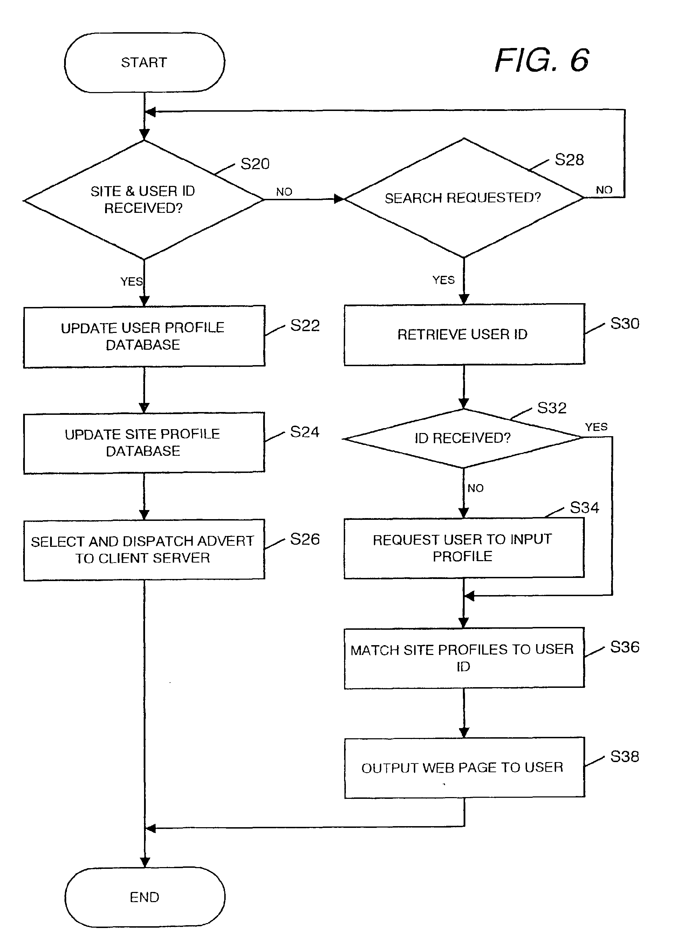

Figure 6 is a flow diagram of the processing of the control module 21 of the main server 9. Initially (S20) the control module 21 determines whether data received from the Internet 11 corresponds to site identification data and user data dispatched from a client server 5;7. If data received does correspond to site identification data and user data the control module 21 then invokes (S22) the profile update module 25 to cause records within the user profile database 24 to be updated to account for a user station 1;3 having user identification data 15 corresponding to received user identification data stored thereon, being used to access website display data 17 on the client server 5, identified with site identification data associated with a record within the site profile database 23.

In this embodiment this is achieved by the profile update module 25 initially determining whether the received user identification data received from the client server 5 corresponds to user identification data 40 within a record in the user profile database. If a user profile record within the user profile database 24 does correspond to the received user identification data, the profile update module 25 causes the classification data 42 in the user profile record with a user identification data 40 corresponding to the received user identification data to be amended by adding to each of the n categories of classification data 42 values corresponding to the n categories of classification data 32 of the site profile record within the site profile record database 23 having site identification data 30 corresponding to the received site identification data.

If the profile update module 25 determines that the received user identification data received from a client server 5;7 does not correspond to any of the user identification data 40 of records within the user profile database 24, this is indicative of the user identification data received from a client server 5;7 having been newly generated by the processing module 19 of that client server 5;7 and therefore indicates that the user station 1;3 accessing the client server 5;7 does not have any user identification data 15 stored within its memory. The profile update module 25 therefore causes a new user profile record to be generated within the user profile database 24 comprising user identification data 40 corresponding to the received user identification data and classification data 40 comprising a copy of the classification data 32 associated with the site profile record within the site profile database 23 associated with site identification data 30 corresponding to the received site identification data from the client server 5;7.

Thus in this way if received user identification data corresponds to user identification data 40 of a record within the user profile database 24, the classification data 42 of that user profile record is amended to account for the user station having the received user identification data 15 stored thereon having visited the website indicated by the received site data, whereas if the user data received by the Internet does not correspond to any of the user profile records within the user profile database 24 a new record is generated and associated with classification data 42 indicative of the user station that has just accessed data on a client server 5;7 only having been used to access the website associated with classification data 32 corresponding to the classification data 32 of the record of the website that has been accessed.

After the profile update module 25 has caused the records within the user profile database 24 to be amended the profile update module 25 then (S24) modifies the site profile record within the site profile database 23 including site identification data 30 corresponding to the received site identification data. In this embodiment the amendment of classification data 32 associated with received site identification data is achieved by the profile update module 25 initially determining a sum of the n values of classification data 42 associated with the user profile record within the user profile database 24 including user identification data 40 corresponding to the received user identification data. The profile update module 25 then calculates for each of the n categories a new value of site classification data 32 utilising the following formula:

$$\text{New Site Value} = \left[ \left( \frac{\text{Site Value}}{\text{Site Total}} \right) + \text{ScalingFactor} \left( \frac{\text{User Value}}{\text{User Total}} \right) \right] \text{x} \frac{\text{SiteTotal}}{\text{Site Total} + \text{Scaling Factor}}$$

where the site total corresponds to the sum of all n items of classification data 32 within the record in the site profile database 23 to be updated and the scaling factor is a selected variable for weighting the amount by which category values of classification data 32 for a site are to be varied by an individual user visiting that site. Thus for example where the scaling factor is set to be equal to the site total for a site profile record the new site value is for a category is the average of the old category value and the category value for the same category within the category data 42 associated with the user profile record within the user profile database 24 associated with the user identification data 40 corresponding to the received user identification data.

In this embodiment the total values for category data for the n categories for classification data for a site profile record within the site profile record database 24 is selected to be equal to 100 so that the n categories are indicative of percentages of content within a website dedicated to a particular category. The scaling factor is selected to be equal to ten so that an individual accessing a website only has a limited effect on the change of values for classification data 32 for that website.

After the profile update module 25 has amended both the user profile records within the user profile database 24 corresponding to the received user identification data and the site profile record within the site profile database 23 corresponding to the received site identification data, the control module 21 then causes the search module 29 to utilize the classification data 42 associated with the received user identification data by a record within the user profile database 24 to select (S26) a site advert 34 corresponding to a website associated with classification data 32 in a record within the site profile database 23 that is similar to the classification data 42 of the user profile record.

In this embodiment this is achieved by the search module 29 initially generating search data comprising n items of classification data corresponding to the n items of classification data within the user profile record corresponding to received user identification data where each of the items of classification data are scaled by a value equal to 100 divided by the sum of all of the category values for the classification data 42 for that record. In this way the search module 29 generates search data where the sum of the n categories of search data is equal to 100 which corresponds to the sum of category values for classification data 32 of site records within the site profile database 24.

The search module 29 then utilizes the calculated search data to determine which of the records within the site profile database 23 have classification data 32 similar to the search data. In this embodiment this is achieved by the search module 29 determining for each of the records within the site profile database 23 the sum of the squares of differences between each item of category value of classification data 32 and the corresponding category value of search data generated by the search module 29. This value is then stored with respect to each of the records within the site profile database 23.

The search module 29 then selects and outputs as display data, advert data 34 corresponding to the record within the user profile database 24 associated with the lowest calculated value where the site identification data 30 for that record does not correspond to the site identification data received by the main server. Thus in this way the search module 29 selects output for display corresponding to a site advert 34 for the website that is different to the website that a user is currently accessing but which is associated with classification data 32 which matches the classification data 42 associated with the received user identification data more closely than other records within the site profile database 23. The processing of the control module 21 and search module 29 then comes to an end.

If (S20) the control module 21 determines that no data corresponding to a site and user identification data has been received the control module 21 then (S28) determines whether a request has been received to search the site profile database 23 direct from a user station 1;3 . If no search has been requested the control module 21 repeats its determination as to whether site and user identification data has been received (S20).

If the control module 21 determines (S28) that a request for searching the site profile database 23 has been received from a user station 1;3 the control module 21 then (S30) sends a message via the Internet 11 to the user station 1;3 from which a request has been received to request that the user station 1;3 outputs via the Internet to the main server 9 a copy of user identification data 15 stored on the user station 1;3.

The control module 21 then waits (S32) until data is received from the user station 1;3 via the Internet 11 and determines whether the data received comprises user identification data corresponding to user identification data 40 of a record within the user profile database 24. If data received from a user station does not correspond to user identification data 40 of a record within the user profile database 24 the control module 21 then outputs to the user station 1;3 from which a request has been received a user interface for inputting a user profile data for use by the search module 29 to search the site profile database 23.

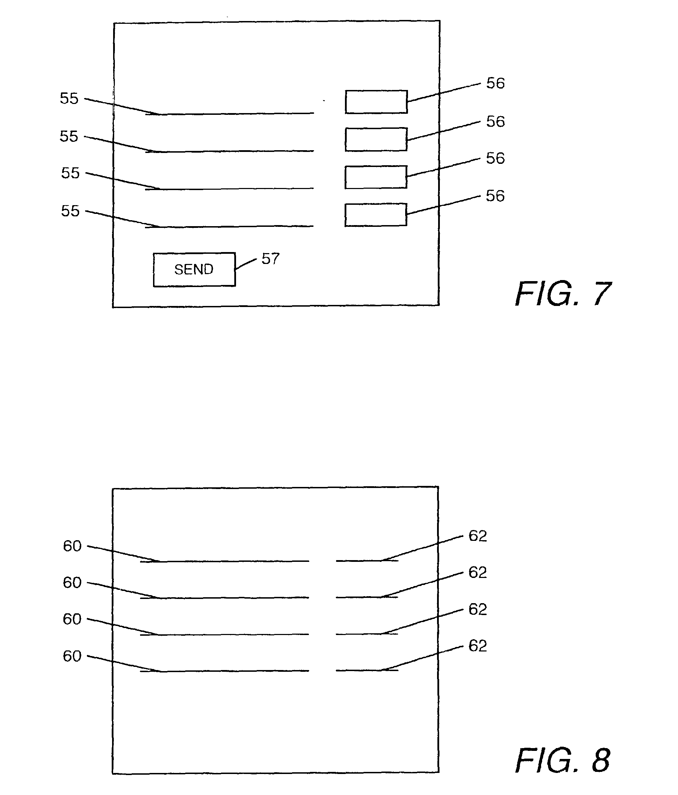

Figure 7 is an exemplary illustration of a user interface for inputting a user profile data generated from data dispatched from the main server 9 to a user station 1. This exemplary user input interface comprises n category titles 55 each associated with a value window 56.

Beneath the list of category titles 55 and the windows 56 is a send button 57. When data for generating the user interface is received by a user station 1;3, the browser program 12 stored within the user station 1;3 causes the data to be converted into a display shown on the screen of the user station 1;3. The user can then select any of the value windows 56 using a keyboard or mouse or other user input device and input a value for use as part of a user profile when values have been entered in all of the value windows 56 a user can then select the send button 57 which causes classification data comprising n category values corresponding to values entered in the n value windows 56 for each of the n categories labelled by category labels 55 in the user interface to be despatched to the main server 9 via the Internet 11.

When either classification data has been received from a user station 1 via the Internet 11 or if user identification data had been received by the main server 9 corresponding to a user profile record within the user profile database 24 the control module 21 then (S36) invokes the search module to utilize either the received classification data or classification data 42 associated with the received user identification number to identify classification data 32 within records within the site profile database 23 that substantially match the user classification data input or selected from the user profile database.

In this embodiment, this is achieved in a similar way to which the search module 29 selects site advert data 34 for dispatch (S26) in that initially a sum of all of the category values of the classification data is determined and each of the individual category values is then scaled by a predetermined value divided by this sum. In this embodiment this predetermined value is set equal to 100.

The search module 29 then calculates for each of the records within the site profile database 23 the difference between the scaled user classification data category values and the corresponding category values for classification data 32 within each of the records within the site profile database 23. A sum of the squares of these differences is then determined as a score indicative of how closely the classification data matches the classification data 32 of the record. The search module 29 then selects site descriptions 36 associated with records having the lowest calculated matching values and outputs (S38) to a user via the Internet 11 data comprising the site identification data 30 and site descriptions 36, for the selected records together with the calculated values. The processing of the search module 29 and the control module 21 then comes to an end.

Figure 8 is an exemplary interface of a screen display generated by a browser program 12 following receipt of display data comprising site description data 36 and calculated value output by the main server 9 following the processing of the search module 29. In this embodiment the screen display comprises a list comprising site description 60 corresponding to site descriptions 36 of records within the site profile database 23 having the lowest calculated matching scores. Each of the site descriptions 60 within the display has displayed next to it a matching score 62 indicating how closely the classification data 32 associated with the site description 36 matches the user classification data used to select the site description data 36. The browser program 12 then enables a user to select using the input device such as a keyboard or mouse to select any of the site descriptions 36 which causes the user station 1 to connect via the Internet 11 to the client server 5;7 corresponding to the selected site description 60 selected.

Thus in this way by requesting a search of a site profile database 23 a user is provided with a list of sites having classification data which substantially corresponds to the classification data associated with that user or a user profile input by a user and the user is then directed towards those sites which substantially correspond to that at user's interests.

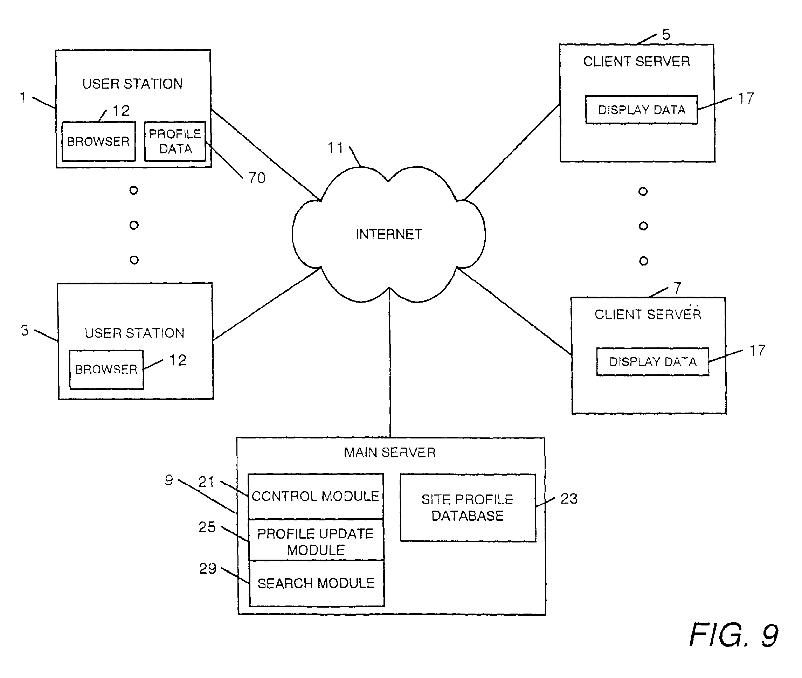

Figure 9 is a schematic block diagram of a computer network embodying a second embodiment of the present invention. The computer network in accordance with this embodiment is substantially the same as the computer network described in relation to the previous embodiment and the same reference numbers have been used in Figure 9 to denote the elements which correspond to the same elements described in relation to Figure 1. Description of these elements will not be repeated here.

In contrast to the embodiment described in relation to Figure 1, the plurality of client servers 5;7 in this embodiment do not have processing modules 19 stored thereon. The main server 9 also does not have a user profile database 24 for storing data associating user identification data 40 with classification data 42 indicative of a user's interest. Also, the control module 21 is modified as will be described in detail later.

In this embodiment the conventional browser programs 12 of the plurality of user stations 1;3 are each arranged to store lists of URLs of servers 5;7 accessed by the user station 1;3. The user stations 1;3 are also arranged to have stored thereon profile data 70, comprising n items of classification data 32 corresponding to the n items of classification data stored as part of records within a user profile database 24 in the previous embodiment.

In this embodiment the control module 21 is arranged to determine when a user station 1;3 initially accesses the main server 9, whether a user station has profile data 70 stored thereon.

If the user station 3 does not have profile data 70 stored thereon the control module 21 generates profile data utilising the list of sites accessed stored by the browser 12 within the user station 3 and the classification data 32 of records in the site profile database 23 for sites corresponding to sites within that list.

In this embodiment this is achieved by the profile update module 25, initially generating profile data 70 corresponding to the classification data 32 associated with site identification data 30 corresponding to the URL of the first site within the list of websites accessed by the user station 3 having a site profile record 23 associated with the URL for the site. The profile update module 25 then modifies this profile data 70 and the classification data 32 associated with the next URL in the list of sites visited by the user station 3 associated with a record within the site profile database 23 in the same manner as has previously been described in relation to the first embodiment. This is then repeated for each of the websites within the list of websites retrieved from the user station 1;3 corresponding to site records within the site profile database 23.

Thus in this way the profile data 70 generated by the profile update module 25 corresponds to classification data within the user profile database 27 in the first embodiment and the classification data 32 of the site profile database records corresponds to site classification data 32 of site profile database records in the first embodiment. After user profile data 70 has been generated in this way it is output for storage on the user station 3 together with a list of sites associated with similar classification data 32 by records within the site profile database 23 selected in the same way in which such records are selected on the first embodiment of this invention.

If a user station 1 accesses the main server 9 which has profile data 70 stored thereon, the control module 21 determines this and then utilises this profile data 70 as initial profile data together with the list of sites generated by the browser program 12 within the user station 1 to amend the site profile database records within the site profile database 23 and to generate new profile data 70 for subsequent storage on the user station 1 in a similar manner to which newly generated user profile data 70 is modified and site profile database records are modified when no profile data is determined to be stored on a user station 1;3 as have been described in detail above.

Thus in this way, by storing profile data 70 within the memory of the user station 1;3, the necessity of providing a user profile database 27 within the main server 9 is avoided. The utilising lists of sites generated by a browser program 12 to update the site profile database 23 only when a user station 1;3 accesses the main server 9 enables the records in the site profiled database 23 to be periodically updated without the need to provide processing modules 19 within the memories of client servers 5;7 for transferring data from the user stations 1;3 to the main server 9.

Although in the above embodiment description has been made of a system generating and amending profile data 70 utilising records including classification data 32 for websites, it will be appreciated that the above system could be arranged to generate classification data 32 for storage within the site profile database 23 associated with sites for which no site record exists. In such a system, a new site record could be generated whenever a new website for which no site record existed is included within the list of websites generated by the browser programs 12 of user stations 1 having profile data 70 stored thereon. The newly generated records would comprise data 30 identifying the sites URL and classification data corresponding to the received profile data 70. The site record would then be amended as a result of later visits in the same manner in which other records within the site profile database are amended.

Although in the previous embodiments reference has been made to lists of text data being displayed to users, it will be appreciated that any suitable form of visual data could be displayed.

In the previous embodiments reference has been made to apparatus which generate classification data for websites utilizing a weighted sum of classification data for the website and user classification data so that the effect of an individual user accessing the site is limited. It will be appreciated that the effect of an individual accessing a site could be made dependent upon the total number of individuals who access a site.

Thus, for example, the classification data for a site could be determined initially by being set equal to classification data associated with the first user accessing a site. The effect of other users accessing the site could then be made to decrease by the classification data for a site being made equal to the sum of the user classification data for each user accessing the site, in a similar manner to how the user classification data has been described as being generated in the first embodiment.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source or object code or in any other form suitable for use in the implementation of the processes according to the invention. The carrier be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. A computer network for generating classification data associated with display data stored on a plurality of client servers, said computer network comprising:

   a plurality of client servers each having display data stored thereon, said display data being associated with an item site identification data;
   a plurality of user stations for accessing display data stored on said client servers, at least some of said user stations having user identification data stored thereon;
   a main server; and
   communication means operable to transmit data between said plurality of user stations, said plurality of client servers and said main server, wherein said main server comprises:

   receiving means for receiving an item of site identification data from any of said plurality of client servers via said communication means together with user identification data corresponding to user identification data stored within a user station utilised to access display data on said client server;
   database means for storing records associating classification data with items of site identification data; and
   storage means for storing records associating classification data -user identification data corresponding to data stored within said at least some of said user station,
   said main server being operable upon receipt of user identification data and an item of site identification data by said receiving means to update classification data within a record corresponding to the received site identification data utilising classification data associated with the received user identification data and to update classification data associated with the received user data, utilising classification data associated with the received site identification data.

2. A computer network for generating classification data associated with display data stored on a plurality of client servers, said computer network comprising:

   a plurality of client servers each having display data stored thereon, said display data being associated with an item site identification data;
   a plurality of user stations for accessing display data stored on said client servers each of said user stations being arranged to store site identification data associated with display data accessed utilizing said user station, at least some of said user stations having user identification data stored thereon;
   a main server; and
   communication means operable to transmit data between said plurality of user stations, said plurality of client servers and said main server, wherein said main server comprises:

   receiving means for receiving site identification data and user identification data from any of said at least some of said user stations;
   database means for storing records associating classification data with items of site identification data; and
   storage means for storing records associating classification data with user identification data corresponding to data stored within said at least some of said user stations,
   said main server being operable upon receipt of user identification data and site identification data by said receiving means to update classification data within records corresponding to the received site identification data utilising classification data associated with the received user identification data and to update classification data associated with the received user data, utilising classification data associated with the received site identification data.

3. A computer network in accordance with claim 1 or 2, wherein said database means is arranged to store output data in association with said classification data, wherein said computer network is arranged to output to a user station accessing display data stored on any of said plurality of client servers, one or more items of selected output data, selected utilizing said classification data associated with user identification data received by said receiving means.

4. A computer network for generating classification data associated with display data stored on a plurality of client servers, said computer network comprising:

a plurality of client servers each having display data stored thereon, said display data being associated with an item site identification data;
a plurality of user stations for accessing display data stored on said client servers, at least some of said user stations having user classification data stored thereon;
a main server; and
communication means operable to transmit data between said plurality of user stations, said plurality of client servers and said main server, wherein said main server comprises:

receiving means for receiving an item of site identification data from any of said plurality of client servers via said communication means together with classification data corresponding to classification data stored within a user station utilised to access display data on said client server;
database means for storing records associating classification data with items of site identification data; and
storage means for storing classification data received by said receiving means, and output means for outputting to a user station via said communications network, updated classification data stored in said storage means;
said main server being operable upon receipt of classification data and an item of site identification data by said receiving means to update classification data within a record corresponding to the received site identification data utilising classification data stored in said storage means and to update said classification data stored in said storage means, utilising classification data associated with received site identification data.

5. A computer network for generating classification data associated with display data stored on a plurality of client servers, said computer network comprising:

a plurality of client servers each having display data stored thereon, said display data being associated with an item site identification data;
a plurality of user stations for accessing display data stored on said client servers each of said user stations being arranged to store site identification data associated with display data accessed utilizing said user station, at least some of said user stations having classification data stored thereon;
a main server; and
communication means operable to transmit data between said plurality of user stations, said plurality of client servers and said main server, wherein said main server comprises:

receiving means for receiving site identification data and classification data from any of said at least some of said user stations;
database means for storing records associating classification data with items of site identification data; and
storage means for storing classification data received by said receiving means, and output means for outputting to a user station via said communications means updated classification data stored in said storage means, said main server being operable upon receipt of classification data and site identification data by said receiving means to update classification data within a record corresponding to the received site identification data utilising classification data stored in said storage means and to update classification data stored in said storage means, utilizing classification data associated with received site identification data.

6. A computer network in accordance with claim 4 or claim 5, wherein said database means is arranged to store output data in association with said classification data, wherein said computer network is arranged to output to a user station accessing display data stored on any of said plurality of client servers, one or more items of selected output data, selected utilizing said classification data stored in said storage means.

7. A computer network in accordance with any preceding claim, further comprising user input generation means for generating in any of said plurality of user stations, user input means for inputting classification data, said database means being arranged to output via said communications network to a said user station one or more items of selected output data selected utilizing said input classification data.

8. A computer network in accordance with any preceding claim, wherein said database means and said storage means are arranged to store classification data comprising a plurality of category values each indicative of an assessment of content in respect of a category, said main server being arranged to update said classification data associated with received site identification data stored within said database means and classification data stored within said storage means by determining weighed average values of corresponding category values of said classification data stored in said database means and said classification data stored in said storage means.

9. A computer network in accordance with claim 8, when dependent upon claim 3, 6 or 7, wherein said database means is arranged to select output data based upon a determination of a value indicative of the sum of the absolute values of differences between category values of classification data in records in said database means and corresponding category values in said classification data utilized to select said one or more items of output data.

10. A computer network in accordance with claim 9, wherein said display data comprises data defining a website and said classification data comprises data indicative of the content of said website defined by said display data.

11. Computer apparatus for generating records associating identification data with profile data, said apparatus comprising:

   database means for storing a plurality of records each associating profile data with identification data;
   receiving means for receiving one or more items of identification data and associating said one or more items of identification data with further profile data; and
   update means being arranged upon receipt of identification data by said receiving means to both amend said further profile data utilising said profile data associated with said received identification data by records within said database means and amend said profile data associated with said received identification data by records within said database means utilising said further profile data.

12. Apparatus in accordance with claim 11 wherein said receiving means is arranged to receive one or more items of identification data together with said further profile data, said receiving means being arranged to associate received identification data with received further profile data received by said receiving means.

13. Computer apparatus in accordance with claim 12, further comprising profile output means for outputting said further profile data amended by said update means.

14. Computer apparatus in accordance with claim 11, further comprising further database means for storing a plurality of records each associating further profile data with user data, wherein said receiving means is further arranged to receive user data, and associate, received identification data with further profile data associated with received user data by a record within said further database, said update means being arranged to update utilising said profile data associated with received identification data, said further profile data associated with received user identification data.

15. Apparatus in accordance with any of claims 11 to 14, wherein said database means is operable to associate with each of said plurality of records, with output data, and output, output data associated with one or more records in said database means selected utilising said further profile data, said apparatus further comprising output means for outputting said output data selected by said database means.

16. Apparatus in accordance with any of claims 11 to 15, further comprising user input interface generation means for generating user input interfaces for inputting further profile data, said database means being arranged upon receipt of further profile data input via said user input interface to output data associated with one or more records in said database means selected utilising said further profile data input utilising said user input interface.

17. Apparatus in accordance with claim 15 or 16, wherein said database means is arranged to select output data associated with one or more records on the basis of the correspondence between said profile data of said records and said further profile data.

18. Apparatus in accordance with any of claims 11 to 17, wherein said database means is arranged for storing a plurality of records associating profile data comprising a plurality of category values each indicative of an assessment of content in respect of a category, and said receiving means is arranged to associate with identification data, further profile data comprising a plurality of category values, said update means being arranged to update said profile data and said further profile data by determining weighted average values of category values corresponding to the same categories for said further profile data and said profile data associated with received identification data.

19. Apparatus in accordance with claim 18 when dependent upon claim 17, wherein said database means is arranged to determine the correspondence between profile data, and said further profile data, based upon a determination of a value indicative of the sum of the absolute values of the differences between the category values of said profile data and the corresponding category values of said further profile data in respect of at least some of said plurality of category values.

20. Apparatus in accordance with any of claims 17 to 19 wherein said category values are indicative of a classification of website data.

21. A method of generating records associating identification data with profile data, said method comprising the steps of:

storing a plurality of records each associating profile data with identification data;
receiving one or more items of identification data and associating said one or more items of identification data with further profile data; and
both amending said further profile data utilising said profile data associated with said received identification data and amending said profile data associated with said received identification data utilising said further profile data.

22. A method in accordance with claim 21 wherein said receiving step comprises receiving one or more items of identification data together with said further profile data, and associating received identification data with said received further profile data.

23. A method in accordance with claim 22, further comprising the step of outputting said amended further profile data.

24. A method in accordance with claim 21, further comprising the step of storing a plurality of records each associating further profile data with user data, wherein said receiving step comprises: receiving user data, and associating received user data with further profile data associated with received user data by a stored record.

25. A method in accordance with any of claims 21 to 24, further comprising the steps of storing in association with each of said plurality of records output data, and outputting output data associated with one or more records in said database means selected utilising said further profile data.

26. A method in accordance with any of claims 21 to 25, further comprising the step of inputting further profile data, and outputting one or more stored records selected utilizing said input further profile data.

27. A method in accordance with claim 25 or 26, wherein said selection of output data associated with one or more records is determined on the basis of the correspondence between said profile data of said stored records and said further profile data.

28. A method in accordance with any of claims 21 to 28, wherein said storing a plurality of records associating profile data comprises storing a plurality of records comprising a plurality of category values each indicative of an assessment of content in respect of a category, and said amendment of said profile data and further profile data comprises determining as updated data, weighted average values of category values corresponding to the same categories of said further profile data and said profile data associated with received identification data.

**29.** A method in accordance with claim 28 when dependent upon claim 27, wherein said determination of the correspondence between profile data, and said further profile data, comprises a determination of a value indicative of the sum of the absolute value of the differences between the category values of said profile data and the corresponding category values of said further profile data in respect of at least some of said plurality of category values.

**30.** A method in accordance with any of claims 27 to 29 wherein said category values are indicative of a classification of website data.

**31.** A recording medium storing computer implementable processor steps for generating within a programable computer an apparatus in accordance with any of claims 11 to 20.

**32.** A recording medium in accordance with claim 31 comprising a computer disc.

**33.** A computer disc in accordance with claim 32, wherein said computer disc comprises an optical, magnetic or magneto-optical disc.

FIG. 1

SITE ID — 30

CATEGORY 1

o

o

o

CATEGORY n — 32

SITE ADVERT — 34

SITE DESCRIPTION — 36

*FIG. 2*

USER ID — 40

CATEGORY 1

o

o

o

CATEGORY n — 42

*FIG. 3*

FIG. 4

FIG. 5

FIG. 6

START

S20
SITE & USER ID
RECEIVED? ──NO──→

S28
SEARCH REQUESTED? ──NO──┐

YES

UPDATE USER PROFILE
DATABASE ── S22

RETRIEVE USER ID ── S30

YES

UPDATE SITE PROFILE
DATABASE ── S24

S32
ID RECEIVED? ──YES──┐

SELECT AND DISPATCH ADVERT
TO CLIENT SERVER ── S26

NO

REQUEST USER TO INPUT
PROFILE ── S34

MATCH SITE PROFILES TO USER
ID ── S36

OUTPUT WEB PAGE TO USER ── S38

END

55
55
55
55

56
56
56
56

SEND — 57

*FIG. 7*

60
60
60
60

62
62
62
62

*FIG. 8*

FIG. 9

EP 1 120 722 A2